Europäisches Patentamt

European Patent Office

Office européen des brevets

(11) Numéro de publication: **0 456 941 A1**

## (12) DEMANDE DE BREVET EUROPEEN

(21) Numéro de dépôt: **90401295.2**

(22) Date de dépôt: **16.05.90**

(51) Int. Cl.5: **A47F 7/14, A47F 5/13,
G11B 23/023, A47B 96/07**

(43) Date de publication de la demande:
**21.11.91 Bulletin 91/47**

(84) Etats contractants désignés:
**AT BE CH DE DK ES GB GR IT LI LU NL SE**

(71) Demandeur: **FAPEC
7, rue de la Croix Vigneron
F-95160 Montmorency(FR)**

(72) Inventeur: **Heimendinger, Bernard
11 bis, rue le Laboureur
F-95160 Montmorency(FR)**

(74) Mandataire: **Hud, Robert
Cabinet COLLIGNON 6, rue de Madrid
F-75008 Paris(FR)**

(54) **Présentoir pour la vente en libre service de produits tels que disques et cassettes.**

(57) Le présentoir est constitué par une succession de compartiments disposés en épi et solidaires à leur extrémité arrière d'une barre de support horizontale 1. A chaque extrémité de la barre 1 est disposée une plaque 23 formant console, conçue pour s'accrocher par son extrémité 24 aux crémaillères des montants d'un meuble d'exposition standard. Les plaques 23 permettent un réglage en hauteur et en profondeur du présentoir. La barre 1 porte aussi, sur sa face arrière, des organes 28 pour l'accrochage à une barre de charge du meuble d'exposition. Ces organes d'accrochage 28, qui coulissent dans des chapes 27, permettent également un réglage fin en hauteur du présentoir.

Le présentoir peut être indifféremment utilisé avec des meubles d'exposition standards ou non, et il permet une utilisation maximum en hauteur de ces meubles.

Fig.1

L'invention a pour objet un présentoir pour articles supports de son et/ou d'images, tels que disques et cassettes, du genre destiné à être mis en place sur le mobilier standard de magasins libre-service.

Les dispositifs utilisés actuellement pour la présentation à la vente, dans les magasins libre-service, d'articles constituant des supports de son et/ou d'images tels que disques ou cassettes sont généralement conçus pour s'adapter aux meubles d'exposition standards de ces magasins. Toutefois, ces présentoirs connus ne peuvent alors être utilisés dans de bonnes conditions et leur emploi entraîne des pertes de place sensibles, aussi bien en longueur qu'en hauteur, n'ayant pas la flexibilité d'adaptation à tous les produits.

La présente invention a pour objet de remédier à cet inconvénient et elle propose à cet effet un présentoir pour disques, cassettes et articles analogues qui, tout étant de conception simple et en assurant une excellente exposition visuelle des produits, est conçu pour permettre une utilisation universelle c'est-à-dire pour s'adapter non seulement aux meubles d'exposition standards mais aussi aux meubles de toute longueur sans occasionner de pertes de place. L'invention a également pour objet de permettre un réglage fin en hauteur du présentoir, entre deux crans successifs des crémaillères équipant le meuble d'exposition, de façon à éviter toute perte de place.

Selon l'invention, le présentoir est constitué d'une succession de compartiments disposés en épi et solidaires vers l'arrière d'une barre de support équipée à ses extrémités de deux consoles d'accrochage destinées à coopérer avec les montants verticaux d'un meuble d'exposition, ces consoles comportant des moyens permettant un réglage fin en hauteur de la position du présentoir par rapport au meuble d'exposition. Le présentoir comporte en plus des moyens d'accrochage à une barre de charge présentée par le meuble à équiper, ces moyens d'accrochage comportant un système de réglage fin de la position en hauteur du présentoir.

Les consoles d'accrochage du présentoir selon l'invention sont avantageusement constituées chacune par une plaque présentant vers l'arrière une partie en forme de crochet et qui s'applique contre une plaque solidaire d'une extrémité de la barre. La plaque formant console d'accrochage présente au moins une ouverture oblongue à axe horizontal, alors que la plaque d'extrémité de la barre présente au moins une rangée verticale d'ouvertures. On comprend alors que par déplacement relatif vertical de la plaque formant console d'accrochage et du présentoir, de façon à disposer l'ouverture oblongue en regard de l'une ou de l'autre des ouvertures de la plaque d'extrémité, on réalise un réglage de la hauteur du présentoir qui est d'autant plus fin que les ouvertures de ladite rangée verticale sont rapprochées les unes des autres. De plus, lesdites ouvertures oblongues permettent de réaliser un réglage en profondeur du présentoir.

Les organes d'accrochage à la barre de charge standard d'un meuble d'exposition présentent chacun la forme d'un crochet dont le corps peut coulisser dans une chape solidaire de la barre de support du présentoir, ce corps présentant verticalement une rangée d'ouvertures pouvant venir successivement dans le prolongement d'ouvertures en regard présentées par la barre de support et par la chape pour être immobilisé dans une position correspondant à la hauteur voulue pour le présentoir.

On comprend que, lorsque le présentoir doit être fixé sur un meuble d'exposition standard de longueur correspondante, on réalise alors son accrochage sur les montants du meuble par l'intermédiaire des consoles. Si la longueur du présentoir est légèrement inférieure à l'écartement des montants du meuble, cette différence est aisément rattrapée par l'insertion d'une cale entre l'une au moins des consoles et la plaque d'extrémité correspondante du présentoir.

Lorsque la longueur du présentoir ne correspond pas à l'écartement des montants du meuble d'exposition, le présentoir est alors suspendu par ses organes d'accrochage à la barre de charge de ce meuble, de sorte que ce présentoir est universel et peut être utilisé sur n'importe quel type de mobilier.

Dans un cas d'accrochage comme dans l'autre on peut, comme on l'a expliqué ci-avant, réaliser un réglage fin en hauteur du présentoir entre deux positions extrêmes correspondant à deux crans successifs des crémaillères équipant le meuble, ce réglage fin permettant de rapprocher au maximum l'un de l'autre deux présentoirs superposés en fonction de l'encombrement en hauteur des disques ou cassettes rangés dans les compartiments du présentoir.

On notera qu'avantageusement les compartiments en épi du présentoir ont une longueur correspondant au diamètre maximum d'un disque et que, pour l'exposition d'articles de plus petite longueur, on peut utiliser des butées clipables pour réduire la longueur utile du compartiment ou encore disposer ces articles à l'intérieur d'étuis d'une longueur correspondant à celle du compartiment.

Pour bien faire comprendre le dispositif selon l'invention ou en décrira ci-après, à titre d'exemple sans caractère limitatif, une forme d'exécution préférée en référence au dessin schématique annexé dans lequel :

la figure 1 est une vue de dessus d'un élément de présentoir pour disques et cassettes selon la présente invention

la figure 2 est une vue de face du présentoir de la figure 1

la figure 3 est, à plus grande échelle, une vue partielle de côté montrant le système d'accrochage par console

la figure 4 est, à plus grande échelle, une vue partielle d'arrière montrant plus particulièrement un organe d'accrochage sur barres ; et

la figure 5 est une coupe verticale prise selon la ligne V-V de la figure 4.

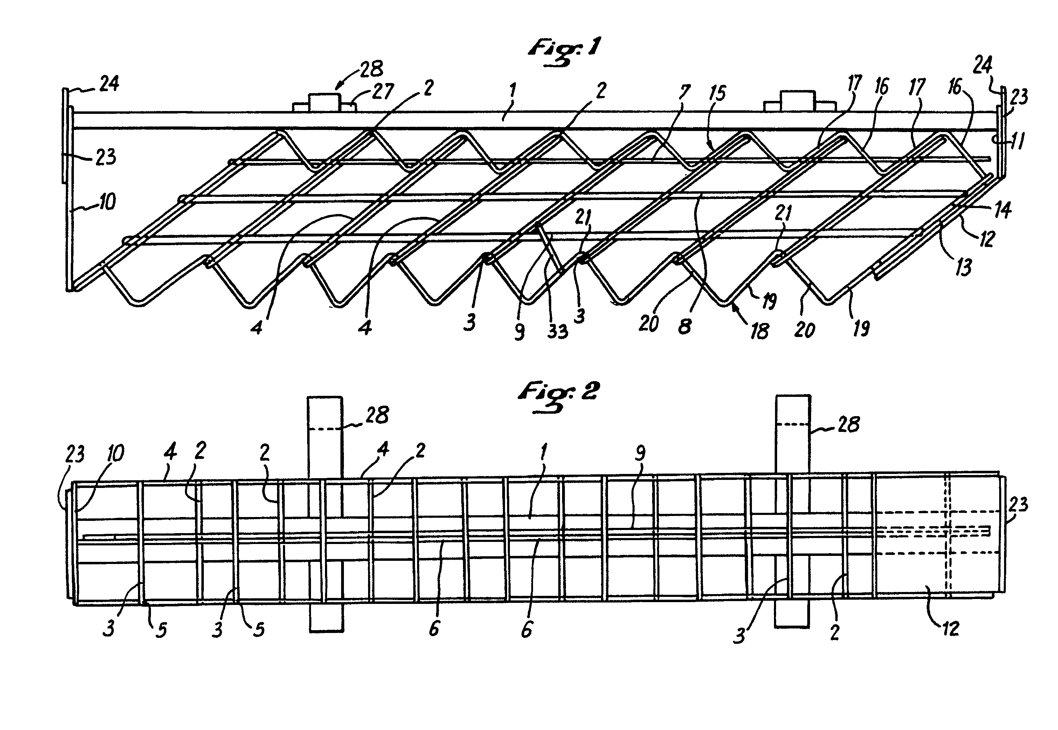

Comme représenté aux figures 1 et 2, le présentoir selon l'invention comprend une barre de support 1 destinée à être disposée horizontalement. Elle est de longueur voisine de celle des meubles d'exposition standards c'est-à-dire par exemple d'une longueur d'environ 1,29m pour des meubles de 1,33m de long. Sur la face avant de la barre 1 sont fixés par soudage, en des emplacements équidistants sur cette barre, les côtés arrière 2 d'une succession de cadres rectangulaires verticaux, au nombre de huit dans l'exemple représenté, réalisés en fil métallique rigide. Chaque cadre comporte des côtés verticaux arrière 2 et avant 3, et des côtés horizontaux supérieur 4 et inférieur 5. Dans chaque cadre, à mi-hauteur des côtés avant et arrière, est fixé par soudage un élément intermédiaire 6 qui s'étend horizontalement sur toute la longueur du cadre. Chaque côté 2 est fixé à la barre 1 de façon a faire saillie vers le haut et vers le bas de cette barre, et de façon que le cadre dont il fait partie soit disposé en épi c'est-à-dire fasse avec la barre 1 un angle d'environ 40°. Trois tiges horizontales 7,8,9, parallèles à la barre 1 sont portées par les éléments intermédiaires 6 des cadres successifs en étant fixées à ceux-ci par soudage.

A chaque extrémité la barre 1 est solidaire par soudage de la face intérieure d'une plaque latérale. A l'extrémité de gauche en regardant les figures 1 et 2 la plaque latérale 10, orientée perpendiculairement à la barre 1, est plane et solidaire à son extrémité avant du côté vertical avant 3 du premier cadre. A l'autre extrémité de la barre 1 la plaque latérale présente une partie 11, parallèle à la plaque 10, qui se prolonge vers l'avant par une partie 12 orientée parallèlement aux cadres. Sur sa face interne la partie de plaque 12 est solidaire d'un cadre 13, de même hauteur que les autres cadres du présentoir mais de plus faible longueur, de façon que son côté vertical avant soit aligné avec les côtés avant 3 des autres cadres. Sur l'élément intermédiaire horizontal 14 porté par le cadre 13 sont fixées par soudage les extrémités des barres 8 et 9.

A hauteur des éléments intermédiaires 6, un fil 15 en métal rigide, coudé en zig-zag, s'étend sur toute la longueur entre le cadre 13 et le dernier des cadres disposé de l'autre côté. Le fil 15 est constitué d'une succession de segments 16,17 orientés à 90°, chaque segment 16 étant orienté perpendiculairement à l'axe de deux cadres successifs, en étant disposé à l'extrémité arrière de ces cadres, et chaque segment 17 étant orienté dans la direction longitudinale d'un cadre, sur la partie arrière de celui-ci. La partie angulaire reliant un segment 16 au segment 17 qui le suit est fixée par soudage à la face interne de la barre 1. De façon analogue un fil coudé 18 s'étend parallèlement au fil 15 à l'extrémité avant du présentoir, avec des segments 19 parallèles aux segments 17 et des segments 20 parallèles aux segments 16. La partie angulaire 21, reliant une portion 20 à la portion 19 qui la suit, est fixée par soudage aux côtés avant 3 des cadres. Deux cadres successifs déterminent ainsi, avec les portions de fil arrière 16 et avant 20, un logement à section horizontale rectangulaire d'une longueur d'environ 30cm.

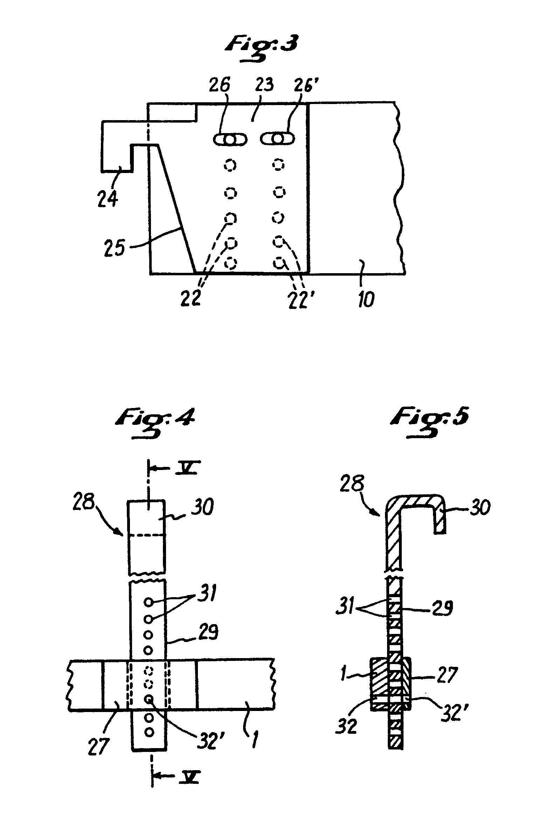

Chaque plaque latérale 10, 11 comporte sur sa partie proche de l'extrémité de la barre 1 (voir en particulier la figure 3) deux rangées verticales d'ouvertures 22, 22'. Sur la face extérieure de ces plaques vient s'appliquer une plaque mobile 23 dont l'extrémité arrière présente à sa partie supérieure un prolongement 24 en forme de bec d'accrochage se poursuivant par une partie 25 inclinée vers l'arrière. La plaque mobile 23 présente à sa partie supérieure, en alignement horizontal, deux ouvertures oblongues 26, 26' à axe horizontal dont les parties centrales ont entre elles le même écartement que deux ouvertures 22, 22' alignées horizontalement. On comprend que, en déplaçant horizontalement la plaque 23 par rapport à la plaque 10 ou 11 avec laquelle elle coopère, on peut grâce aux ouvertures oblongues 26, 26' régler l'écartement en profondeur du présentoir par rapport à son support. On comprend également que, par déplacement vertical de la plaque 23 par rapport à la plaque 10 ou 11 avec laquelle elle coopère, par venue en regard des ouvertures 26, 26' avec un couple déterminé d'ouvertures 19, 19', on peut régler la hauteur du présentoir par rapport au meuble d'exposition sur lequel il s'accroche.

De plus, la barre 1 est solidaire sur sa face arrière, symétriquement par rapport à son milieu, de deux chapes 27 dans chacune desquelles peut coulisser le corps 29 d'un organe d'accrochage 28 dont l'extrémité supérieure 30 est en forme de crochet. Comme on le voit mieux aux figures 4 et 5, le corps 29 de chaque organe d'accrochage 28 présente verticalement une succession d'ouvertures 31 destinées, lorsqu'on déplace verticalement le corps 29 à l'intérieur de la chape 27, à venir successivement se disposer en regard de deux ouvertures 32, 32' se faisant face qui sont ménagées respectivement à travers la barre 1 et à travers la face arrière de la chape 27. L'introduction d'une vis à travers les ouvertures 32, 31, 32' en regard permet donc de fixer la barre 1, et le présentoir qui lui est solidaire, dans une position réglable en hauteur par rapport aux organes d'accrochage 28.

Le mode d'utilisation du présentoir selon l'invention, qui se comprend aisément d'après la description qui précède, est le suivant. Le présentoir est destiné à recevoir des disques ou des cassettes dans chacun des compartiments orientés en épi et déterminés par deux cadres consécutifs et par les portions de fil avant 20 et arrière 16 correspondantes. La longueur de ce compartiment (30cm) correspond au diamètre du plus grand des objets susceptibles d'être exposés c'est-à-dire un disque 33 tours ou certains disques vidéo. Pour la disposition, dans ces compartiments, d'objets de plus faible encombrement on prévoit de disposer transversalement une butée 33 se clipant dans la position désirée sur les côtés supérieurs des deux cadres latéraux (voir figure 1) et délimitant vers l'avant un emplacement d'une longueur correspondant à celle de l'objet à présenter. Dans le cas de cassettes audio, celles-ci peuvent être contenues dans la partie avant transparente d'étuis (non représentés au dessin) occupant toute la longueur du compartiment. On remarquera que la disposition en épi de ces compartiments est particulièrement favorable pour une lecture aisée, par le consommateur, des indications portées sur les cassettes ou les disques exposés.

Le présentoir est destiné à être accroché, par les consoles constituées par les plaques 23, aux montants latéraux d'un meuble d'exposition standard. Si la longueur du présentoir se trouve légèrement inférieure à l'écartement des montants, il suffit alors de disposer une cale entre l'une au moins des plaques 10, 11 et la plaque 23 correspondante pour compenser cette différence et permettre d'accrocher les parties 24 des plaques 23 aux crémaillères en regard des deux montants du meuble. Afin de perdre le moins de place possible en hauteur lors de l'utilisation de plusieurs présentoirs superposés on peut effectuer un réglage fin (tous les 10 ou 15mm) du positionnement en hauteur de chaque présentoir par déplacement relatif vertical du présentoir par rapport aux plaques 23 de support (grâce aux rangées verticales d'ouvertures 22 des plaques 10, 11) comme on l'a expliqué plus haut. De plus, comme déjà exposé, on pourra régler le positionnement en profondeur du présentoir grâce aux ouvertures oblongues 26, 26' des plaques 23.

S'il se trouve que le mobilier d'exposition n'est pas d'une largeur standard, ou que les crémaillères des montants de ce mobilier ne sont pas adaptées pour coopérer avec les plaques 23 formant consoles, l'accrochage du présentoir peut cependant être réalisé sans difficulté. On utilise alors les barres de charge standard s'appuyant sur les crémaillères du meuble, et on se fixe sur ces barres au moyen des organes d'accrochage 28. Là encore on peut réaliser un réglage fin de la hauteur du présentoir par rapport au support grâce aux possibilités offertes par les diverses ouvertures 31 alignées verticalement des organes d'accrochage 28.

On comprendra que la description ci-dessus a été donnée à simple titre d'exemple, sans caractère limitatif, et que des adjonctions ou des modifications constructives pourraient y être apportées sans sortir du cadre de l'invention définie par les revendications qui suivent.

## Revendications

1. Présentoir pour la vente en libre service de produits tels que des disques ou des cassettes, caractérisé en ce qu'il comprend une succession de compartiments disposés en épi et solidaires vers l'arrière d'une barre de support (1) comportant à ses extrémités deux consoles (23) d'accrochage sur les montants verticaux d'un meuble d'exposition, lesdites consoles (23) comportant des moyens qui permettent un réglage fin en hauteur de la position du présentoir par rapport au meuble d'exposition.

2. Présentoir selon la revendication 1, caractérisé en ce que les consoles sont constituées chacune par une plaque (23) présentant vers l'arrière une partie en forme de crochet (24) et qui s'applique de façon réglable contre une plaque (10, 11) solidaire d'une extrémité de la barre de support (1).

3. Présentoir selon la revendication 2, caractérisé en ce que les moyens de réglage en hauteur de la position du présentoir comprennent au moins une rangée verticale d'ouvertures (22, 22') ménagées dans chaque plaque d'extrémité (10, 11) du présentoir et au moins une ouverture (26, 26') ménagée dans la plaque (23) formant console, le réglage en hauteur s'obtenant par modification de la position de l'ouverture (26, 26') de la console (23) par rapport aux ouvertures (22, 22') de la plaque d'extrémité (10, 11).

4. Présentoir selon la revendication 3, caractérisé en ce que les ouvertures (26, 26') ménagées dans chaque plaque (23) formant console ont une forme allongée en direction horizontale pour permettre un réglage en profondeur de la position du présentoir.

5. Présentoir selon l'une quelconque des revendications 1 à 4, caractérisé par des moyens d'adaptation de la longueur du présentoir à l'écartement des montants du meuble à équiper, cesdits moyens étant constitués par au moins une cale d'épaisseur appropriée disposée entre au moins l'une des plaques (23) formant consoles et la plaque d'extrémité correspondante (10, 11) du présentoir.

6. Présentoir selon l'une quelconque des revendications précédentes, caractérisé par des moyens d'accrochage (28) à une barre de charge présentée par le meuble à équiper, cesdits moyens d'accrochage (28) comportant un système de réglage fin de la position en hauteur du présentoir.

7. Présentoir selon la revendication 6, caractérisé en ce que lesdits moyens d'accrochage (28) comprennent au moins deux crochets dont le corps (29) peut coulisser dans une chape (27) solidaire de la barre de support (1), ledit corps (29) présentant verticalement une rangée d'ouvertures (31) pouvant venir successivement dans le prolongement d'ouvertures (32, 32') en regard présentées par la barre (1) et par la chape (27), selon la position en hauteur voulue pour le présentoir.

Fig.1

Fig.2

Fig:3

Fig:4

Fig:5

Office européen
des brevets

**RAPPORT DE RECHERCHE
EUROPEENNE**

Numéro de la demande

**EP 90 40 1295**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | CA-A-1 208 174  (CORBEIL)<br>* page 2, ligne 23 - page 4, ligne 30; figure 1 *<br>– – – | 1 | A 47 F 7/14<br>A 47 F 5/13<br>G 11 B 23/023<br>A 47 B 96/07 |
| A | DE-B-2 801 773  (MOSER & SOHN)<br>* colonne 2, ligne 33 - colonne 3, ligne 20; figures 1, 2 *<br>– – – | 1 | |
| A | US-A-4 150 753  (ARMSTRONG STORE FIXTURES COR-PORATION)<br>* figure 1 *<br>– – – | 1 | |
| A | US-A-3 012 250  (ACORN ENGINEERING COMPANY)<br>* le document en entier *<br>– – – – – | 1,3 | |

| DOMAINES TECHNIQUES RECHERCHES (Int. Cl.5) |
|---|
| A 47 F<br>A 47 B<br>G 11 B |

Le présent rapport de recherche a été établi pour toutes les revendications

| Lieu de la recherche | Date d'achèvement de la recherche | Examinateur |
|---|---|---|
| La Haye | 18 décembre 90 | DE GROOT R.K. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

& : membre de la même famille, document correspondant